# EUROPEAN PATENT APPLICATION

(11) **EP 3 760 934 A1**
(43) Date of publication of application: **06.01.2021**
(21) Application number: 19382561.9
(22) Date of filing: 01.07.2019
(51) Int. Cl.: F24D 3/12, F24D 3/14, E04F 15/02, E04F 15/08

(54) **HEAT-RADIATING STRUCTURE AND METHOD FOR PROVIDING THE SAME**

(71) Applicant: Fundación Tecnalia Research & Innovation, 48160 Derio - Bizkaia (ES)
(72) Inventor: Abascal Muro, Jose Miguel, 48160 Derio - Bizkaia (ES)
(74) Representative: Balder IP Law, S.L.

(57) **Abstract**

A heat-radiating structure (1-6) comprising: at least one radiant panel (10a-10d); at least one tile (20); and one or more mechanical devices (50, 60, 70) for attaching radiant panels (10a-10d) to tiles (20); each radiant panel of the at least one radiant panel (10a-10d) having formed on a first surface (11) thereof: first one or more recesses (15a, 15b) adapted to receive a conduit (100) for radiation of heat; and second one or more recesses (16, 17) adapted to receive the one or more mechanical devices (50, 60, 70); each of the one or more mechanical devices (50, 60, 70) being attached to a first surface (21) of a tile of the at least one tile (20), and further attached the first surface (11) of the at least one radiant panel (10a-10d) by being introduced in one of the second one or more recesses (16, 17).

## Description

### TECHNICAL FIELD

The present invention relates to the field of heat-radiating structures. More specifically, the present invention relates to heat-radiating structures with tiles detachably fixed to radiant panels.

### STATE OF THE ART

Heat-radiating structures are growing in popularity due to the comfort resulting from the way in which the heat is radiated, and also due to the lower energy consumption they feature in comparison with other heat-radiating solutions, such as radiators. In addition, the conduit(s) radiating heat in heat-radiating structures are hidden from sight, thus they are also interesting from an aesthetics standpoint.

As entire floors or walls may be provided in the form of a heat-radiating structure, the installation and maintenance of the same are time-consuming operations that, furthermore, entail certain difficulties.

The manner in which the tiles of the heat-radiating structures are attached to the radiant panels drives a large percentage of the cost of both the installation and maintenance tasks.

Prior art heat-radiating structures such as, for instance, those described in patent document EP-1063478-A1 have the tiles that cover the radiant panels attached to said radiant panels by means of mortar or adhesive.

Providing such material is a laborious and a rather inconvenient task. Moreover, the mortar or the adhesive may block the access to the conduit(s) that radiate heat when maintenance of the same is to be carried out; it may occur that in order to find out which portion of the conduit has a failure (e.g. leakage) many tiles have to be removed so as to inspect the different portions of the conduit. But on top of that, in order to withdraw the tiles usually it is necessary to break them because the mortar or adhesive impedes the extraction of the same. This, in turn, results in an additional cost due to the provision of additional tiles that are to replace the withdrawn (and broken) ones.

Oftentimes the tiles are purchased from a tile manufacturer that produces batches of tiles with a particular design during few years, therefore when replacement of tiles is to take place it may occur that the tiles are not produced anymore. In such cases, either part of the heat-radiating floor or wall has tiles featuring one design and another part of said floor or wall has tiles featuring another design (because the same tiles cannot be purchased anymore), something which is rather aesthetically awkward and unpleasant, or all the tiles are replaced with tiles having a different design, thereby increasing the maintenance costs.

There is an interest in providing heat-radiating structures that simplify both the installation and maintenance operations.

### DESCRIPTION OF THE INVENTION

The heat-radiating structure and method for providing the same of the present disclosure are intended to solve the shortcomings of prior art heat-radiating structures.

A first aspect of the invention relates to a heat-radiating structure comprising:
at least one radiant panel;
at least one tile; and
one or more mechanical devices for attaching radiant panels to tiles;
each radiant panel of the at least one radiant panel having formed on a first surface thereof:
   first one or more recesses adapted to receive a conduit for radiation of heat; and
   second one or more recesses adapted to receive the one or more mechanical devices;
each of the one or more mechanical devices being attached to a first surface of a tile of the at least one tile, and further attached to the first surface of a radiant panel of the at least one radiant panel by being introduced in one of the second one or more recesses thereof.

The tile or tiles can be installed on top of the radiant panel(s) and withdrawn therefrom in a simple and straightforward manner thanks to the mechanical device(s). In this sense, both installation and maintenance of the heat-radiating structure are simple in comparison with prior art heat-radiating structures.

The mechanical device(s) is/are attaching means that secure the tile or tiles to the radiant panel(s). To this end, the one or more radiant panels have one or more recesses for receiving the mechanical device(s) so as to attach the tile or tiles to each radiant panel, and the mechanical device(s) is/are attachable to the tile or tiles.

Whenever there is a problem with a conduit arranged in the radiant panels, or a tile breaks, the tile or tiles that need to be withdrawn or replaced are taken out from the structure. In particular, the tile or tiles are pulled so that the mechanical device(s) attached thereto are either withdrawn from the recess(es) of the radiant panel(s), or detached from the tile or tiles; in both cases, each tile is removed one by one so as to either gain access to both the radiant panels and the conduit arranged therein without breaking the tile, or replace the broken tile or tiles by new ones.

Once maintenance of the conduit has been completed, the removed tile or tiles may be attached to the radiant panels once again by means of the one or more mechanical devices.

In the case of broken tiles, the new tiles that are to replace the affected ones may reuse the existing one or more mechanical devices so as to attach to the at least one radiant panel.

In some embodiments, each tile of the at least one tile has formed on a first surface thereof third one or more recesses adapted to receive the one or more mechanical devices; and each of the one or more mechanical devices is attached to the first surface of a tile of the at least one tile by being introduced in one of the third one or more recesses.

The one or more mechanical devices may be detachably attached to the tile or tiles thanks to the introduction of the same in one or more recesses on the first surface of the tile or tiles.

In some embodiments, one or both ends of each of the one or more mechanical devices comprise one or more projecting elements adapted for introduction in the recess where the mechanical device is introduced. In some of these embodiments, the one or more projecting elements are adapted to be elastically deformable.

The one or more mechanical devices may be provided with projecting elements in one end thereof or in both ends thereof so that one or both ends may be introduced in recesses of the radiant panel(s) and, optionally, recesses of the tile(s).

When the projecting elements are elastically deformable, the installation of the tile and/or the removal of the same requires less force owing to the shape adjustment of the projecting elements to the recess device into which they are to be inserted and/or from which they are to be removed. Accordingly, the projecting elements get elastically deformed based on the shape present in the recess during the insertion or removal; in some cases, said shape in the recess is the shape of a retention device introduced in the recess and which is adapted to receive the mechanical device attached to the tile.

In some embodiments, a first end of each of the one or more mechanical devices has a planar shape, and a second end of each of the one or more mechanical devices has one or more projecting elements adapted for introduction in the recess where the mechanical device is introduced, the first end being attached to a tile of the at least one tile with adhesive means.

The one or more mechanical devices may be detachably attached to the tile or tiles thanks to adhesive means known in the art. When the tiles are to be removed, depending on the adhesive properties the adhesive may not cope with the pulling force applied to the tiles thereby releasing the attachment between the mechanical device(s) (the planar face thereof) and the tile, hence making possible the removal of the tile or tiles, even though preferably the adhesive has adhesive properties sufficient to cope with the pulling force so that the tile(s) is/are removed when the at least one mechanical device is withdrawn from the recess where the at least one mechanical device is introduced.

In some embodiments, each radiant panel of the at least one radiant panel comprises one or more retention devices, each retention device being introduced in a different one of the second one or more recesses, and each retention device being adapted to receive the one or more projecting elements of one mechanical device such that it provides resistance against withdrawal of the mechanical device from the recess. In some of these embodiments, each retention device is adapted to be elastically deformable.

The retention devices are mechanical devices that further secure the attachment between tiles and radiant panels. The retention devices are provided with a geometry that is compatible with the geometry of one end of the mechanical devices (e.g. the geometry of the retention devices may be partially or completely complementary to the geometry of one end of the mechanical devices, which may result in the existence of certain play between the mechanical device(s) and the retention device(s) in one or more directions, or no play at all). The pulling force necessary to withdraw one or more tiles from the radiant panels that the tile or tiles are attached to is larger than if no retention device were provided.

In some embodiments, each recess of the one or more recesses adapted to receive the one or more mechanical devices has a lengthwise dimension extending 25.0% or more (e.g. 40.0%, 50.0%, 60.0%, 75.0%, etc.) of: a lengthwise or a widthwise dimension of the at least one radiant panel; and/or a lengthwise or a widthwise dimension of the at least one tile. In some of these embodiments, the lengthwise dimension of said recesses extends 100.0% (i.e. the recesses extend from one end to the opposite end) or less than 100.0% of the aforementioned dimension(s) of the at least one radiant panel and/or tile. The lengthwise dimension may be less than, for instance, any one of the following values in relation to aforementioned dimension(s) of the at least one radiant panel and/or tile: 90.0%, 75.0%, 60.0%, and 50.0%.

Recesses of tiles and/or radiant panels with an extended lengthwise dimension, i.e. with a lengthwise dimension greater than or equal to 25.0% of the lengthwise/widthwise dimension of the at least one radiant panel/tile, simplify the manufacturing process of the heat-radiating structure and, thus, the cost associated therewith.

Furthermore, the one or more mechanical devices may feature a lengthwise dimension similar to or equal to that of the recess that they are to be arranged in so as to enhance the attachment between the tile and the radiant panel; in some cases the one or more mechanical devices features a lengthwise dimension greater than 100% of the lengthwise or widthwise dimension of the at least one tile or radiant panel so that a plurality of tiles and radiant panels may be attached by means of a single mechanical device. Additionally or alternatively, a plurality of mechanical devices may be introduced in the same recess of the tile or radiant panel.

In some other embodiments, each recess of the one or more recesses adapted to receive the one or more mechanical devices has a lengthwise dimension extending less than 25.0%, and in some cases even less than e.g. 20.0%, 10.0%, and 5.0% of: a lengthwise or a widthwise dimension of the at least one radiant panel; and/or a lengthwise or a widthwise dimension of the at least one tile. In these embodiments, the lengthwise dimension of said recesses extends more than 0.0% of the aforementioned dimension(s) of the at least one radiant panel and/or tile.

In each of these recesses one or more mechanical devices may be introduced, therefore the mechanical devices feature a lengthwise dimension similar to or smaller than that of the recess that they are to be arranged in.

In some embodiments, one or more radiant panels or each radiant panel of the at least one radiant panel has formed on two or more (e.g. three, four) surfaces thereof one or more recesses adapted to receive a mechanical device for attaching the radiant panel to another radiant panel, the two or more surfaces being different from the first surface and preferably being perpendicular to the first surface. In some of these embodiments, two of the two or more surfaces are opposite surfaces, and in some of these embodiments, other two of the two or more surfaces (e.g. four surfaces), are opposite surfaces. In some of these embodiments, the heat-radiating structure comprises (second) one or more mechanical devices introduced in one of the one or more recesses of one or more of the two or more surfaces.

The radiant panel(s) may be detachably attached to other radiant panel(s) by means of additional mechanical devices that are introduced in said one or more recesses of the two or more surfaces. These two or more surfaces are, preferably, lateral surfaces that are perpendicular to the first surface. This way of attaching radiant panels eases the provision of a larger heat-radiating structure in which a plurality of radiant panels is arranged since no mortar, concrete or other paste materials are necessary to secure the radiant panels; moreover, fewer or no tools at all are necessary to secure the radiant panels in contrast to radiant panels secured by means of paste materials. Also, the use of mechanical devices for attaching one radiant panel to another one(s) eases the decommission of the radiant panels whenever necessary, and furthermore the radiant panels may even be reused as it is unlikely that they will be damaged during decommission thereof (whereas radiant panels having paste materials for the attachment thereof are more prone to damage).

In some embodiments, one or more radiant panels or each radiant panel of the at least one radiant panel has formed on a second surface thereof one or more recesses adapted to receive a mechanical device for attaching the radiant panel to a surface on which the radiant panel is to be arranged, the second surface being opposite to the first surface. In some of these embodiments, the heat-radiating structure comprises (second) one or more mechanical devices introduced in one of the one or more recesses of the second surface.

The radiant panel(s) may be attached to a floor, wall or ceiling (in particular, to a surface thereof) where the radiant panel is to be arranged by means of one or more mechanical devices that secure the radiant panel(s) to that surface. To this end, the one or more recesses formed on the second surface receive said mechanical device(s), which in turn are to be attached to the surface of the floor, wall or ceiling, for instance with attaching means such as adhesive, mechanical connectors such as e.g. screws, bolts, etc. or any other suitable means, or even the mechanical device(s) is/are introduced in a recess formed on said surface.

In some embodiments, each of the one or more mechanical devices is a metallic mechanical device or a plastic mechanical device.

In some embodiments, each radiant panel of the at least one radiant panel is a ceramic panel, a mortar panel or a concrete panel.

In some embodiments, each tile of the at least one tile is a ceramic tile, a stone tile, a wooden tile, or a concrete tile.

In some embodiments, the heat-radiating structure further comprises the conduit for radiation of heat in one of the first one or more recesses of one or more radiant panels of the at least one radiant panel. In some of these embodiments, the conduit is adapted for flow of liquid therethrough.

In some embodiments, the heat-radiating structure is a heat-radiating floor structure.

Heat-radiating floor structures may benefit from the heat-radiating structure of the present disclosure since the installation and ulterior maintenance of such floors is rather cumbersome. The disclosed heat-radiating structure makes possible a more convenient installation and maintenance of heat-radiating floor structures owing to the attachment of tiles to radiant panels.

In some embodiments, the heat-radiating structure further comprises a thermally insulating material attached to a second surface of the at least one radiant panel, the second surface being opposite to the first surface. By way of example, a mineral wool, Polyurethane Foam, Polystyrene (EPS), cork, etc. adapted for thermal insulation may be attached to said second surface.

A second aspect of the invention relates to a heat-radiating floor comprising a heat-radiating structure according to the first aspect of the invention.

In some embodiments, the heat-radiating floor comprises a plurality of heat-radiating structures according to the first aspect of the invention.

A third aspect of the invention relates to a method for providing a heat-radiating structure, comprising:
providing at least one radiant panel, each radiant panel having formed on a first surface thereof:
   first one or more recesses adapted to receive a conduit for radiation of heat; and
   second one or more recesses adapted to receive the one or more mechanical devices;
introducing a conduit for radiation of heat in one of the first one or more recesses of one or more radiant panels of the at least one radiant panel;
arranging at least one tile on top of each radiant panel of the at least one radiant panel such that a first surface of the at least one tile is facing the first surface of the radiant panel; and
attaching each tile of the at least one tile to the radiant panel by providing, between the first surface of the tile and the first surface of the radiant panel, one or more mechanical devices for attaching radiant panels to tiles such that each of the one or more mechanical devices is introduced in one of the second one or more recesses.

The heat-radiating structure provided with the present method eases the installation and possible maintenance of the same with respect to prior art heat-radiating structures. The at least one tile is detachably attached to the at least one radiant panel so that in the event that the conduit arranged in the radiant panel(s) has a failure, getting access to the same is straightforward and, moreover, may avoid having to break any of the existing tiles. Also, the replacement of broken tiles is simplified with the heat-radiating structure provided.

In some embodiments, each tile of the at least one tile has formed on a first surface thereof third one or more recesses adapted to receive the one or more mechanical devices; and each tile of the at least one tile is attached to a radiant panel of the at least one radiant panel such that each of the one or more mechanical devices is further attached to the first surface of the tile by being introduced in one of the third one or more recesses.

In some embodiments, one or both ends of each of the one or more mechanical devices comprise one or more projecting elements adapted for introduction in the recess where the mechanical device is introduced. In some of these embodiments, the one or more projecting elements are adapted to be elastically deformable.

In some embodiments, a first end of each of the one or more mechanical devices has a planar shape, and a second end of each of the one or more mechanical devices has one or more projecting elements adapted for introduction in the recess where the mechanical device is introduced, the first end being attached to a tile of the at least one tile with adhesive means.

In some embodiments, each radiant panel of the at least one radiant panel comprises one or more retention devices, each retention device being introduced in a different one of the second one or more recesses, and each retention device being adapted to receive the one or more projecting elements of one mechanical device such that it provides resistance against withdrawal of the mechanical device from the recess. In some of these embodiments, each retention device is adapted to be elastically deformable.

In some embodiments, each recess of the one or more recesses adapted to receive the one or more mechanical devices has a lengthwise dimension extending 25.0% or more (e.g. 40.0%, 50.0%, 60.0%, 75.0%, etc.) of: a lengthwise or a widthwise dimension of the at least one radiant panel; and/or a lengthwise or a widthwise dimension of the at least one tile. In some of these embodiments, the lengthwise dimension of said recesses extends 100.0% or less than 100.0% of the aforementioned dimension(s) of the at least one radiant panel and/or tile. The lengthwise dimension may be less than, for instance, any one of the following values in relation to aforementioned dimension(s) of the at least one radiant panel and/or tile: 90.0%, 75.0%, 60.0%, and 50.0%.

In some other embodiments, each recess of the one or more recesses adapted to receive the one or more mechanical devices has a lengthwise dimension extending less than 25.0%, and in some cases even less than e.g. 20.0%, 10.0%, and 5.0% of: a lengthwise or a widthwise dimension of the at least one radiant panel; and/or a lengthwise or a widthwise dimension of the at least one tile. In these embodiments, the lengthwise dimension of said recesses extends more than 0.0% of the aforementioned dimension(s) of the at least one radiant panel and/or tile.

In some embodiments, one or more radiant panels or each radiant panel of the at least one radiant panel has formed on two or more (e.g. three, four) surfaces thereof one or more recesses adapted to receive a mechanical device for attaching the radiant panel to another radiant panel, the two or more surfaces being different from the first surface and preferably being perpendicular to the first surface. In some of these embodiments, two of the two or more surfaces are opposite surfaces; and in some of these embodiments, other two of the two or more surfaces (e.g. four surfaces), are opposite surfaces. In some of these embodiments, the method further comprises attaching one or more radiant panels to one or more other radiant panels by arranging, between each pair of radiant panels, one or more mechanical devices in one of the one or more recesses of one or more of the two or more surfaces.

In some embodiments, one or more radiant panels or each radiant panel of the at least one radiant panel has formed on a second surface thereof one or more recesses adapted to receive a mechanical device for attaching the radiant panel to a surface on which the radiant panel is to be arranged, the second surface being opposite to the first surface. In some of these embodiments, the method further comprises attaching one or more radiant panels to a surface (e.g. a floor, a wall, a ceiling) by arranging, between the radiant panel and the surface, one or more mechanical devices in one of the one or more recesses of the second surface.

In some embodiments, each of the one or more mechanical devices is a metallic mechanical device or a plastic mechanical device.

In some embodiments, each radiant panel of the at least one radiant panel is a ceramic panel, a mortar panel or a concrete panel.

In some embodiments, each tile of the at least one tile is a ceramic tile, a stone tile, a wooden tile, or a concrete tile.

In some embodiments, the conduit is adapted for flow of liquid therethrough.

In some embodiments, the heat-radiating structure is a heat-radiating floor structure.

In some embodiments, the method further comprises attaching a thermally insulating material to a second surface of the at least one radiant panel, the second surface being opposite to the first surface.

Similar advantages as those described for the first aspect of the invention are also applicable to the second and third aspects of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figures 1 and 2 partially show heat-radiating structures in accordance with embodiments of the invention.
Figures 3 and 4 show radiant panels for heat-radiating structures in accordance with embodiments of the invention.
Figure 5 diagrammatically shows a heat-radiating structure in accordance with an embodiment of the invention.
Figures 6 and 7 diagrammatically show a cross-section of heat-radiating structures in accordance with embodiments of the invention.
Figures 8A and 8B diagrammatically show a mechanical device for heat-radiating structures and an attachment procedure thereof.
Figures 9A to 9C diagrammatically show a method for providing a heat-radiating structure in accordance with an embodiment of the invention, the heat-radiating structure including the mechanical device of Figures 8A and 8B.
Figure 10 shows an attachment of a tile to a radiant panel with a mechanical device similar to that of Figures 8A and 8B.
Figures 11A to 11C diagrammatically show a mechanical device and a retention device for heat-radiating structures and an attachment procedure thereof.
Figures 12A and 12B diagrammatically show a method for providing a heat-radiating structure in accordance with an embodiment of the invention, the heat-radiating structure including both the mechanical device and the retention device of Figures 11A to 11C.
Figure 13 diagrammatically shows a mechanical device for heat-radiating structures.
Figures 14A and 14B diagrammatically show a method for providing a heat-radiating structure in accordance with an embodiment of the invention, the heat-radiating structure including the mechanical device of Figure 13.

### DESCRIPTION OF WAYS OF CARRYING OUT THE INVENTION

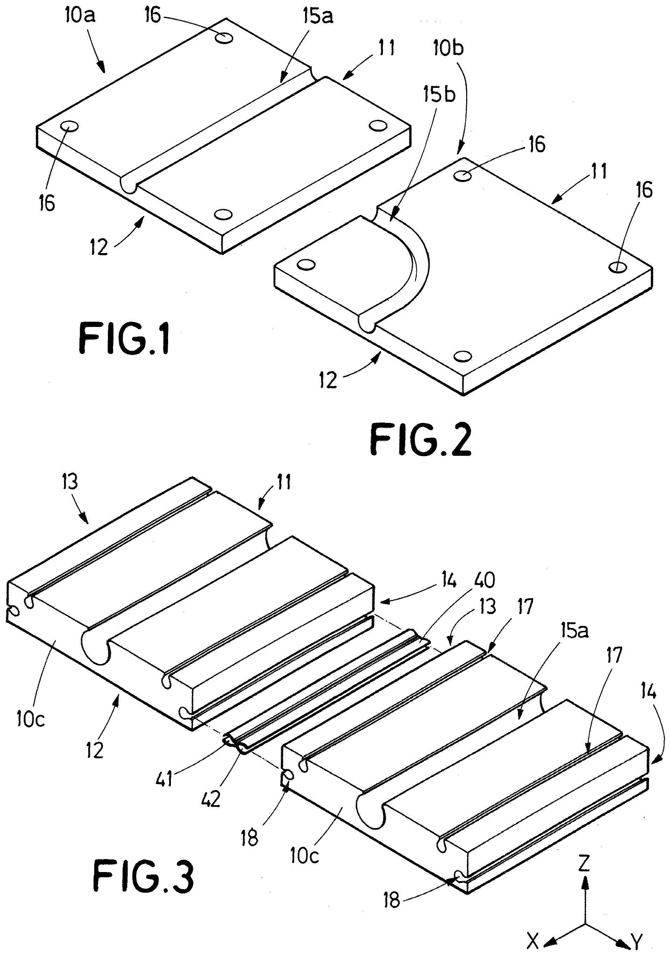

Figure 1 partially shows a heat-radiating structure in accordance with an embodiment of the invention.

The heat-radiating structure comprises a tile (not illustrated for the sake of clarity only), a radiant panel 10a having formed on a first surface 11 thereof both a first recess 15a for receiving a conduit (not illustrated for the sake of clarity only) and one or more second recesses 16 for receiving mechanical devices (not illustrated for the sake of clarity only) that attach one or more tiles to the radiant panel 10a. The first recess 15a is straight and goes from one end of the radiant panel 10a to the opposite end. The second recesses 16 have a lengthwise dimension extending less than 25.0% of the lengthwise and widthwise dimensions of the radiant panel 10a, for instance but without limitation they extend between 0.1% and 3.0% of one or both of the lengthwise and widthwise dimensions.

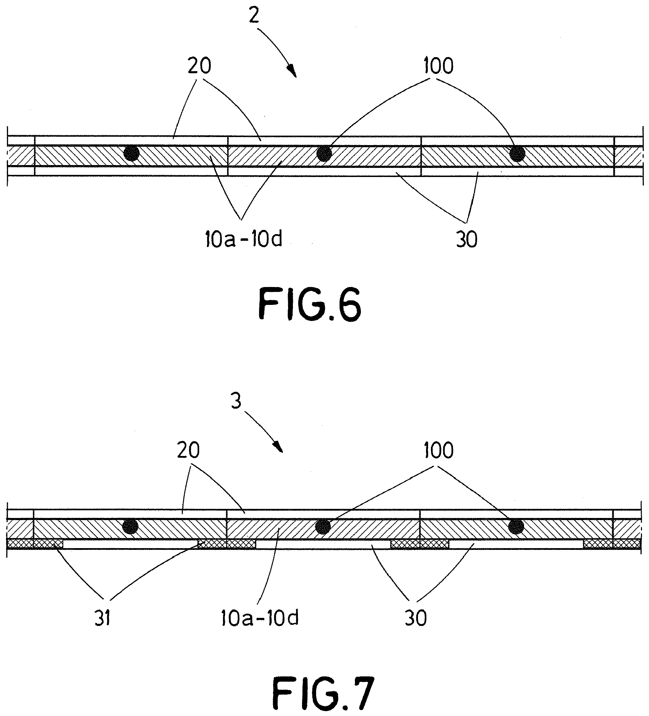

A thermally-insulating material (not illustrated) as shown in Figures 6 and 7 is preferably to be attached to the radiant panel 10a-10d, particularly to a second surface 12 thereof that is opposite to the first surface 11.

Figure 2 partially shows a heat-radiating structure in accordance with another embodiment of the invention.

The heat-radiating structure of the embodiment of Figure 2 comprises the same elements described with reference to the heat-radiating structure of the embodiment of Figure 1, the only difference being that the first recess 15b goes from one end of the radiant panel 10b to an adjacent end; the first recess 15b has a turn for routing the conduit between these two ends. Preferably, the turn has a radius such that neither the conduit is mechanically damaged nor the flow of fluid through the conduit is slowed down or stopped.

Also, as it is readily apparent, a plurality of conduits may be arranged such that they are interconnected in order to form a complete conduit. For example, the turn part of the heat-radiating structure may have arranged therein a conduit shaped in accordance with the turn and which is connected at both ends to respective rectilinear conduits.

Figure 3 shows two radiant panels 10c for heat-radiating structures.

The radiant panels 10c comprise on the first surface 11 thereof the first recess 15a for receiving a conduit and two second recesses 17 having a lengthwise dimension extending a totality of the lengthwise and/or widthwise dimension of the radiant panels 10c (in this example, the lengthwise dimension extends along the X axis represented and the widthwise dimensions extends along the Y axis represented). On the surface of each lateral side 13, 14 of the radiant panels 10c there is also formed a respective recess 18 extending a totality of the lengthwise dimension of the radiant panels 10c. In some other embodiments, one, three or all four lateral sides has a second recess 18 formed thereon, and the second recesses 18 preferably do not overlap the first recess 15a.

A mechanical device 40 with two ends 41, 42 adapted to fit in the recesses 18 of the lateral sides 13, 14 is arranged between the two radiant panels 10c so that the two may be detachably attached owing to the device 40 along the Y axis represented. The mechanical device 40 extends in a lengthwise dimension and has a length shorter than or equal to the length and/or width of the radiant panels 10c; in other embodiments, the length of the mechanical device 40 is greater than the length and/or width of the radiant panels 10c, in which case a single mechanical device 40 may be used for attaching more than a pair of radiant panels 10c.

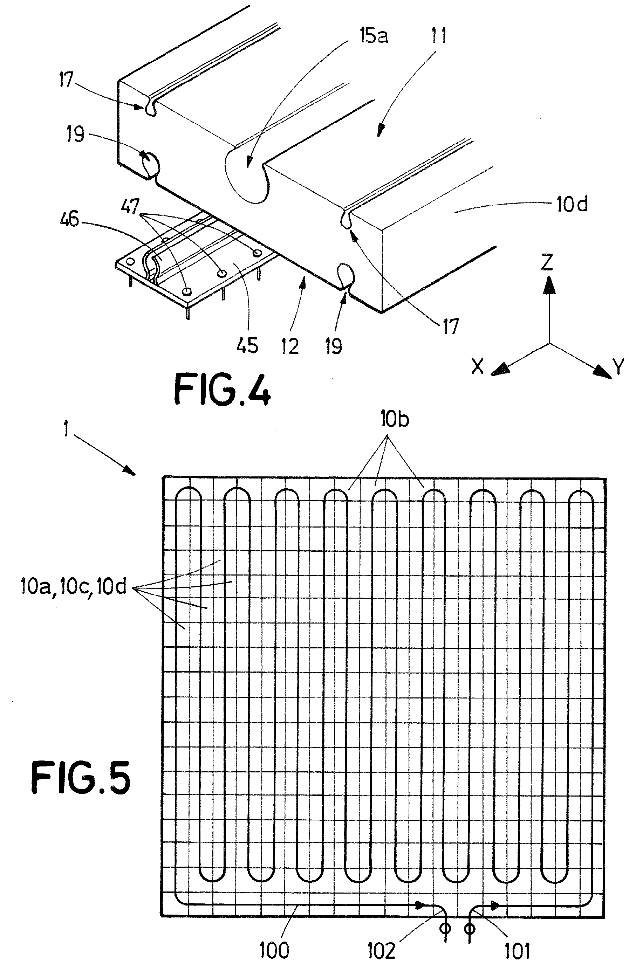

Figure 4 shows a radiant panel 10d for heat-radiating structures.

The radiant panel 10d is similar to the radiant panels 10c of Figure 3, however instead of having recesses formed on the surface of the lateral sides, the radiant panel 10d comprises two recesses 19 formed on the second surface 12 (opposite to the first surface 11) and which are adapted to receive a mechanical device 45 (only one is illustrated for the sake of clarity).

The mechanical device 45 has a protruding element 46 that fits in the recesses 19, and comprises on the other side thereof a plurality of holes and mechanical connectors 47 for attaching the mechanical device 45 to a surface, for example a floor, a wall or a ceiling. The mechanical device 45 has a lengthwise dimension extending more than 25.0% of the lengthwise dimension of the radiant panel 10d (along the X axis represented).

In some other embodiments, the recesses 19 for attachment of the radiant panel 10d to a surface or the recesses 18 for attachment of the radiant panel 10c of Figure 3 to other radiant panel(s) may have a shorter length, such as less than 25.0% of the lengthwise or widthwise dimension of the radiant panels 10c, 10d, e.g. between 0.0% and 5.0% of one or both of said dimensions, between 5.0% and 10.0%, etc. In some examples, only one mechanical device is introduced in each such recess 18, 19.

Radiant panels 10a, 10b as described with reference to Figures 1 and 2 may also comprise one or more recesses 18, 19 as described with reference to the radiant panels 10c, 10d of Figures 3 and 4.

Figure 5 diagrammatically shows a heat-radiating structure 1 in accordance with an embodiment of the invention.

The heat-radiating structure 1 comprises a plurality of tiles (not illustrated), a plurality of radiant panels 10b as those described with reference to Figure 2 and radiant panels 10a, 10c and/or 10d as those described with reference to Figures 1, 3 and 4, a conduit 100 arranged in the recess of the plurality of radiant panels 10a-10d. The conduit 101 enters into the heat-radiating structure 1 through an entry point 101 and exits the structure 1 through an exit point 102.

Preferably, the heat-radiating structure 1 further comprises a thermally-insulating material on a bottom surface of the radiant panels 10a-10d.

Figure 6 diagrammatically shows a cross-section of a heat-radiating structure 2 in accordance with an embodiment of the invention.

The heat-radiating structure 2 comprises a plurality of tiles 20 detachably attached to a first surface of a plurality of radiant panels (any of the radiant panels 10a-10d described with reference to Figures 1-4) by means of a plurality of mechanical devices (not illustrated). The heat-radiating structure 2 further comprises a conduit 100 arranged in the first recess of the radiant panels 10a-10d, and a thermally insulating material 30 attached to a second surface of the plurality of radiant panels 10a-10d with, for instance, adhesive means.

Figure 7 diagrammatically show a cross-section of a heat-radiating structure 3 in accordance with another embodiment of the invention.

The heat-radiating structure 3 of the embodiment of Figure 7 comprises the same elements described with reference to the heat-radiating structure 2 of the embodiment of Figure 6, but in addition it also comprises hardwood flooring 31 attached to the second surface of the radiant panels 10a-10d.

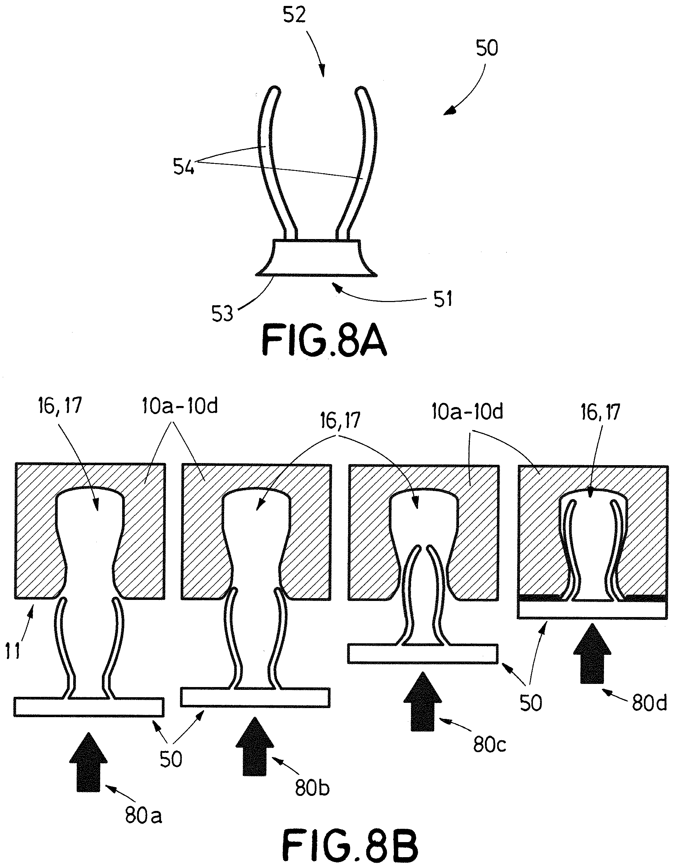

Figure 8A diagrammatically shows a mechanical device 50 for heat-radiating structures, and Figure 8B diagrammatically shows an attachment procedure 80a-80d thereof.

The mechanical device 50 comprises a planar surface 53 on a first end 51 thereof and two elastically deformable projecting elements 54 on a second end 52 thereof. The planar surface 53 is suitable for attachment thereof to a tile of a heat-radiating structure with adhesive means, whereas the projecting elements 54 are suitable for introduction in a recess 16, 17 formed on a first surface 11 of a radiant panel 10a-10d of a heat-radiating structure.

With reference to Figure 8B, the mechanical device 50 is attached to the radiant panel 10a-10d by introducing 80a-80d the projecting elements 54 in the recess 16, 17. The projecting elements 54 contact the recess 16, 17 thereby getting compressed and adjusting the geometry thereof to that of the recess 16, 17. When the projecting elements 54 are completely introduced in the recess 16, 17, the elements 54 partially or completely recover their original geometry owing to the geometry of the recess 16, 17, which is wider at the inner portion thereof, thereby completing the attachment of the mechanical device 50 to the radiant panel 10a-10d.

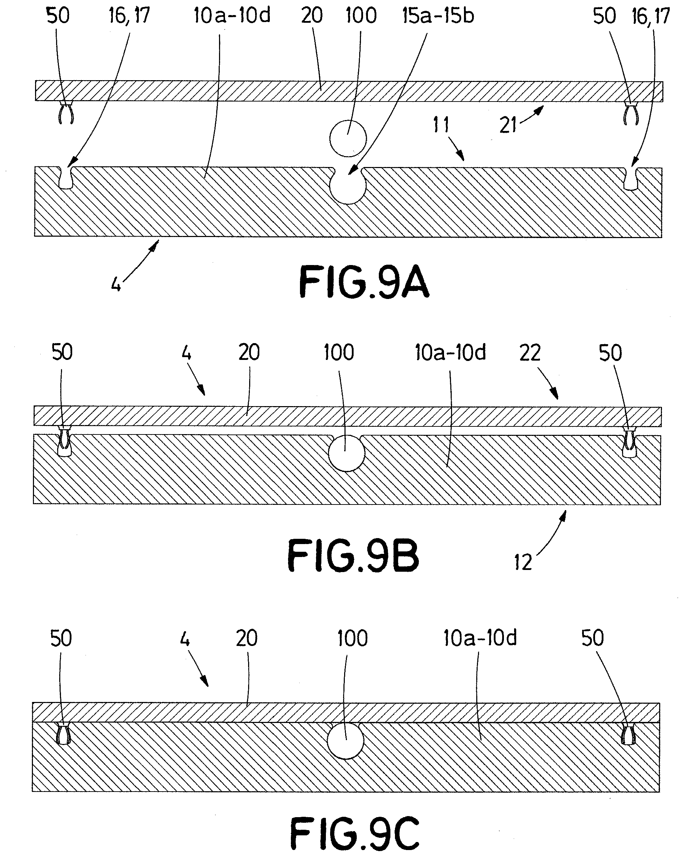

Figures 9A to 9C diagrammatically show a method for providing a heat-radiating structure 4 in accordance with an embodiment of the invention, the heat-radiating structure 4 including the mechanical device 50 of Figures 8A and 8B.

At least two mechanical devices 50 as described with reference to Figures 8A and 8B are attached to a first surface 21 of a tile 20 of the heat-radiating structure 4 with adhesive means. Particularly, the planar surface 53 of the mechanical devices 50 is provided with adhesive so as to attach to the first surface 21. Said first surface 21 is opposite to a second surface 22 of the tile 20, the latter being the one provided with decorative elements or patterns as it is the surface 22 visible to people when the heat-radiating structure 4 is installed.

The conduit 100 is introduced in the first recess 15a, 15b of the radiant panel 10a-10d, and then the tile 20 is approached to the radiant panel 10a-10d such that the mechanical devices 50 are introduced in the second recesses 16, 17 of the radiant panel 10a-10d. The mechanical devices 50 are interposed between the tile 20 and the radiant panel 10a-10d, thereby attaching the tile 20 to the radiant panel 10a-10d.

When the tile 20 has to be withdrawn from the heat-radiating structure 4, either because the tile 20 is broken or because the conduit 100 is to be inspected, the tile 20 is pulled from the second surface 22 thereof so that the mechanical devices 50 are withdrawn from the recesses 16, 17.

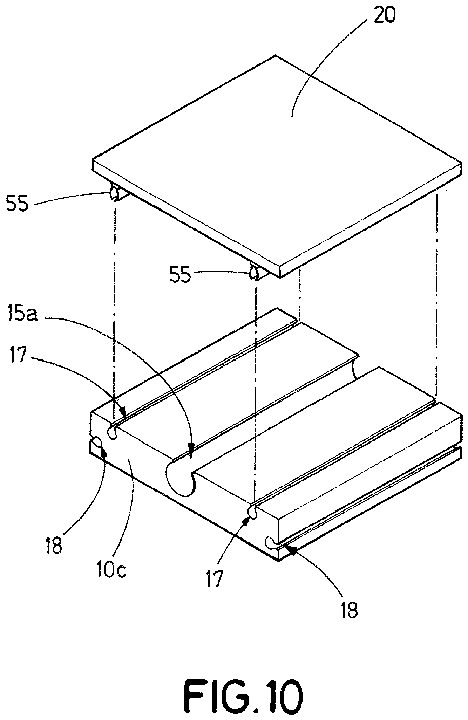

Figure 10 shows an attachment of a tile 20 to a radiant panel 10c with a mechanical device 55 similar to that of Figures 8A and 8B.

The mechanical device 55 is similar to the mechanical device 50, the difference being that a lengthwise dimension thereof (along the X axis represented) is between 90.0% and 100.0% (the endpoints being included in the range) of the lengths of both the tile 20 and the radiant panel 10c. The mechanical device 55 is introduced in the recess 17 of the radiant panel 10c and attached to the tile 20 by means of adhesive.

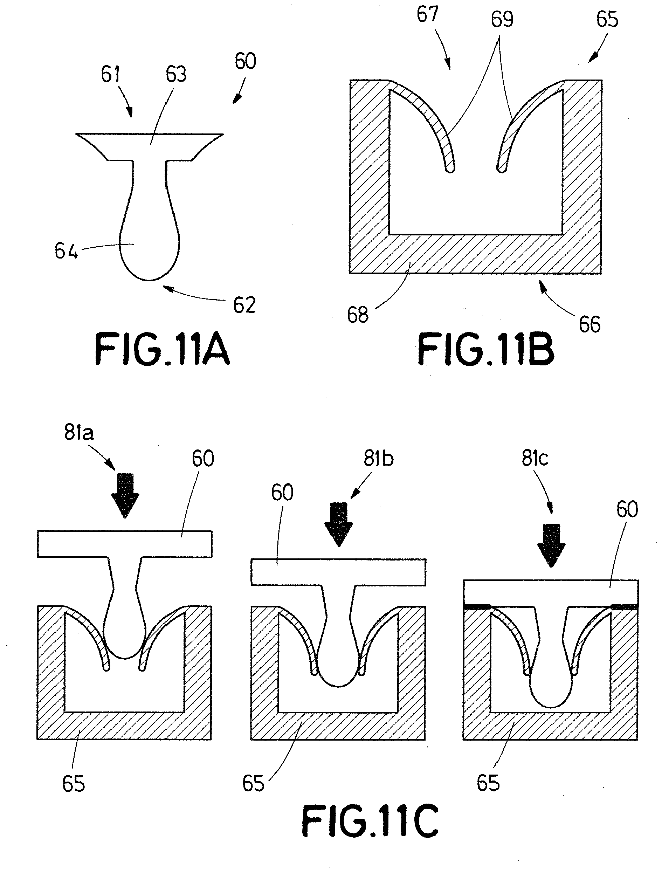

Figure 11A diagrammatically shows a mechanical device 60, Figure 11B diagrammatically shows a retention device 65, and Figure 11C represents an attachment procedure 81a-81c thereof.

The mechanical device 60 comprises a planar surface 61 on a first end 63 thereof, and a projecting element 64 on a second end 62 thereof. The planar surface 63 is suitable for attachment thereof to a tile of a heat-radiating structure with adhesive means, whereas the projecting element 64 is suitable for introduction in a recess formed on a first surface of a radiant panel of a heat-radiating structure, and more particularly in the retention device 65 introduced in said recess.

The retention device 65 comprises a planar surface 68 on a first end thereof 66 and two arms 69 on a second end 67 thereof adapted to receive the projecting element 64 of the mechanical device 60. The planar surface 68 is to contact a surface of the recess in the heat-radiant panel so that the second end 67 of the retention device 65 may receive the mechanical device 60. Preferably, the two arms 69 are elastically deformable so that, as illustrated in Figure 11C, they adapt their shape to that of the projecting element 64 when the latter is introduced in the retention device 65.

Once the projecting element 64 is completely introduced 81c in the retention device 65, when the arms 69 are elastically deformable they compress the projecting element 64 so as to increase the retention, thereby improving the attachment of the tile to the radiant panel.

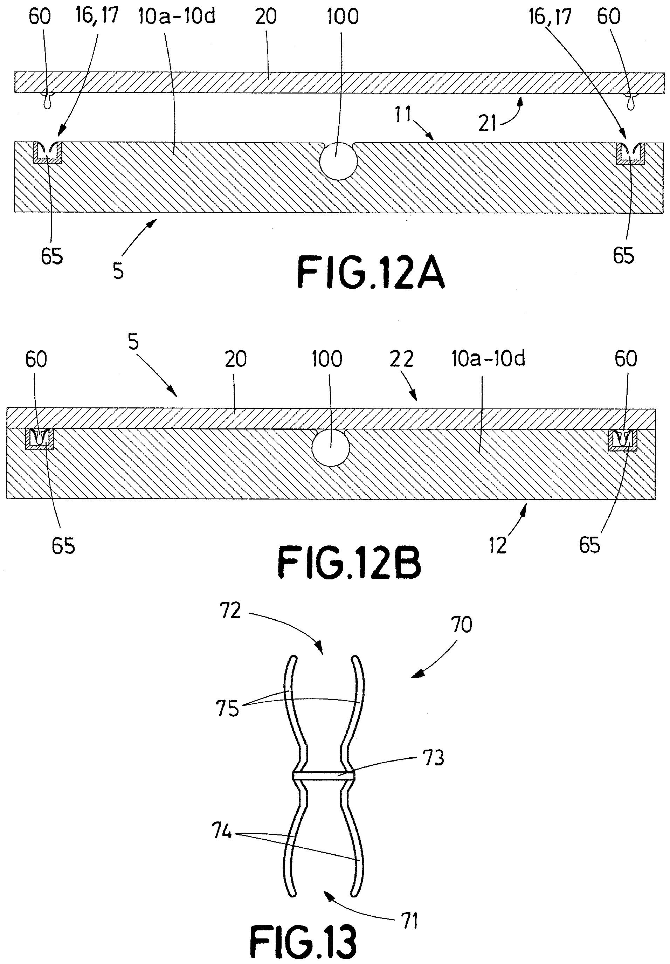

Figures 12A and 12B diagrammatically show a method for providing a heat-radiating structure 5 in accordance with an embodiment of the invention, the heat-radiating structure 5 including both the mechanical device 60 and the retention device 65 of Figures 11A to 11C.

At least two mechanical devices 60 as described with reference to Figures 11A to 11C are attached to a first surface 21 of a tile 20 of the heat-radiating structure 5 with adhesive means (the planar surface 63 is provided with adhesive so as to attach to the first surface 21). Also, at least two retention devices 65 as described with reference to Figures 11B and 11C are attached to a first surface 11 of a radiant panel 10a-10d of the heat-radiating structure 5; in particular, they are introduced in second recesses 16, 17 thereof and may be attached with adhesive means or by friction existing between the geometry of the retention device 65 and the geometry of the recess 16, 17.

The conduit 100 is introduced in the first recess 15a, 15b of the radiant panel 10a-10d, and then the tile 20 is approached to the radiant panel 10a-10d such that the mechanical devices 60 are introduced in the retention devices 65 and, thus, in the recesses 16, 17 of the radiant panel 10a-10d. The mechanical devices 60 are interposed between the tile 20 and the radiant panel 10a-10d, thereby attaching the tile 20 to the radiant panel 10a-10d.

When the tile 20 has to be withdrawn from the heat-radiating structure 5, the tile 20 is pulled from the second surface 22 thereof so that the mechanical devices 60 are withdrawn from the retention devices 65 and, thus, from the recesses 16, 17 or, less preferably, the mechanical devices 60 come off the first surface 21 of the tile 20.

Figure 13 diagrammatically shows a mechanical device 70 for heat-radiating structures.

The mechanical device 70 comprises first two projecting elements 74 on a first surface 71 thereof, second two projecting elements 75 on a second surface 72 thereof, and a base 73 therebetween from which the projecting elements 74, 75 extend. Each pair of projecting elements 74, 75 is suitable for introduction in a recess of a tile or in a recess of a radiant panel of a heat-radiating structure.

Preferably, each pair of projecting elements 74, 75 is elastically deformable.

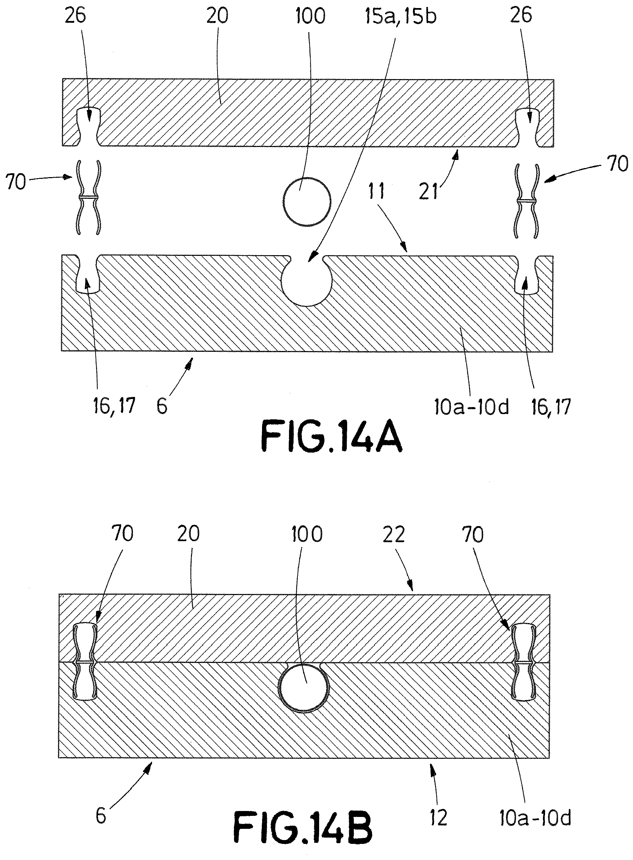

Figures 14A and 14B diagrammatically show a method for providing a heat-radiating structure 6 in accordance with an embodiment of the invention, the heat-radiating structure 6 including the mechanical device 70 of Figure 13.

At least two mechanical devices 70 as described with reference to Figure 13 are provided in the heat-radiating structure 6. The first two projecting elements 74 are to be introduced in a recess 26 formed on a first surface 21 of the tile 20, and the second two projecting elements 75 are to be introduced in a second recess 16, 17 of the radiant panel 10a-10d. The conduit 100 is first introduced in the first recess 15a, 15b. Also, at least two retention devices 65 as described with reference to Figures 11B and 11C are attached to a first surface 11 of a radiant panel 10a-10d of the heat-radiating structure 6; in particular, they are introduced in second recesses 16, 17 thereof and may be attached with adhesive means or by friction existing between the geometry of the retention device 65 and the geometry of the recess 16, 17.

The conduit 100 is introduced in the first recess 15a, 15b of the radiant panel 10a-10d, and then the tile 20 is approached to the radiant panel 10a-10d such that the mechanical devices 70 are introduced in both the recesses 26 of the tile 20 and the recesses 16, 17 of the radiant panel 10a-10d. The mechanical devices 70 are interposed between the tile 20 and the radiant panel 10a-10d, thereby attaching the tile 20 to the radiant panel 10a-10d.

When the tile 20 has to be withdrawn from the heat-radiating structure 6, the tile 20 is pulled from the second surface 22 thereof so that the mechanical devices 70 are withdrawn from the recesses 26 of the tile 20 or from the recesses 16, 17 of the radiant panel 10a-10d.

Any one of the heat-radiating structures 1-6 may provide a heat-radiating floor structure.

Even though in the embodiments illustrated in the drawings each radiant panel is covered by one tile, it is readily apparent that more than one tile can be attached to one radiant panel to cover the same by means of the mechanical devices and recesses described. Also, in some embodiments one tile can be attached to two or more radiant panels, thus a single tile can cover multiple radiant panels. Both configurations also fall within the scope of the present disclosure.

The radiant panels and the tiles of the present disclosure feature, in some embodiments, a same length in the two major dimensions thereof, i.e. the lengthwise and widthwise dimensions are equal in length.

In this text, the terms first, second, third, etc. have been used herein to describe several devices, elements or parameters, it will be understood that the devices, elements or parameters should not be limited by these terms since the terms are only used to distinguish one device, element or parameter from another. For example, the first one or more recesses could as well be named second one or more recesses, and the second one or more recesses could be named first one or more recesses without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A heat-radiating structure (1-6) comprising:
at least one radiant panel (10a-10d);
at least one tile (20); and
one or more mechanical devices (50, 55, 60, 70) for attaching radiant panels (10a-10d) to tiles (20);
each radiant panel of the at least one radiant panel (10a-10d) having formed on a first surface (11) thereof:
first one or more recesses (15a, 15b) adapted to receive a conduit (100) for radiation of heat; and
second one or more recesses (16, 17) adapted to receive the one or more mechanical devices (50, 55, 60, 70);
each of the one or more mechanical devices (50, 55, 60, 70) being attached to a first surface (21) of a tile of the at least one tile (20), and further attached the first surface (11) of the at least one radiant panel (10a-10d) by being introduced in one of the second one or more recesses (16, 17).

2. The heat-radiating structure of claim 1, wherein:
each tile of the at least one tile (20) has formed on a first surface (21) thereof third one or more recesses (26) adapted to receive the one or more mechanical devices (70); and
each of the one or more mechanical devices (70) is attached to the first surface (21) of a tile of the at least one tile (20) by being introduced in one of the third one or more recesses (26).

3. The heat-radiating structure of any one of the preceding claims, wherein one or both ends (52, 62, 71, 72) of each of the one or more mechanical devices (50, 55, 60, 70) comprise one or more projecting elements (54, 64, 74, 75) adapted for introduction in the recess (16, 17, 26) where the mechanical device (50, 55, 60, 70) is introduced, the one or more projecting elements (54, 64, 74, 75) being preferably adapted to be elastically deformable.

4. The heat-radiating structure of any one of claims 1-2, wherein a first end (51, 61) of each of the one or more mechanical devices (50, 55, 60) has a planar shape (53, 63), and a second end (52, 62) of each of the one or more mechanical devices (50, 55, 60) has one or more projecting elements (54, 64) adapted for introduction in the recess (16, 17) where the mechanical device (50, 55, 60) is introduced, the first end (51, 61) being attached to a tile of the at least one tile (20) with adhesive means.

5. The heat-radiating structure of claim 4, wherein each radiant panel of the at least one radiant panel (10a-10d) comprises one or more retention devices (65), each retention device (65) being introduced in a different one of the second one or more recesses (16, 17), and each retention device (65) being adapted to receive the one or more projecting elements (64) of one mechanical device (60) such that it provides resistance against withdrawal of the mechanical device (60) from the recess (16, 17), each retention device (65) being preferably adapted to be elastically deformable.

6. The heat-radiating structure of any one of the preceding claims, wherein:
one or more radiant panels (10c) or each radiant panel (10c) of the at least one radiant panel has formed on two or more surfaces (13, 14) thereof one or more recesses (18) adapted to receive a mechanical device (40) for attaching the radiant panel (10c, 10d) to another radiant panel, the two or more surfaces (13, 14) being different from the first surface (11); and/or
one or more radiant panels (10d) or each radiant panel (10d) of the at least one radiant panel has formed on a second surface (12) thereof one or more recesses (19) adapted to receive a mechanical device (45) for attaching the radiant panel (10d) to a surface on which the radiant panel (10d) is to be arranged, the second surface (12) being opposite to the first surface (11).

7. The heat-radiating structure of any one of the preceding claims, further comprising the conduit (100) for radiation of heat in one of the first one or more recesses (15a, 15b) of one or more radiant panels of the at least one radiant panel (10a-10d).

8. A method for providing a heat-radiating structure, comprising:
providing at least one radiant panel (10a-10d), each radiant panel (10a-10d) having formed on a first surface (11) thereof:
first one or more recesses (15a, 15b) adapted to receive a conduit (100) for radiation of heat; and
second one or more recesses (16, 17) adapted to receive the one or more mechanical devices (50, 55, 60, 70);
introducing a conduit (100) for radiation of heat in one of the first one or more recesses (15a, 15b) of one or more radiant panels of the at least one radiant panel (10a-10d);
arranging at least one tile (20) on top of each radiant panel of the at least one radiant panel (10a-10d) such that a first surface (21) of the at least one tile (20) is facing the first surface (11) of the radiant panel (10a-10d); and
attaching each tile of the at least one tile (20) to the radiant panel (10a-10d) by providing, between the first surface (21) of the tile (20) and the first surface (11) of the radiant panel (10a-10d), one or more mechanical devices (50, 55, 60, 70) for attaching radiant panels (10a-10d) to tiles (20) such that each of the one or more mechanical devices (50, 55, 60, 70) is introduced in one of the second one or more recesses (16, 17).

9. The method of claim 10, wherein each tile of the at least one tile (20) has formed on a first surface (21) thereof third one or more recesses (26) adapted to receive the one or more mechanical devices (70); and wherein each tile of the at least one tile (20) is attached to a radiant panel of the at least one radiant panel (10a-10d) such that each of the one or more mechanical devices (70) is further attached to the first surface (21) of the tile (20) by being introduced in one of the third one or more recesses (26).

10. The method of any one of claims 8-9, wherein one or both ends (52, 62, 71, 72) of each of the one or more mechanical devices (50, 55, 60, 70) comprise one or more projecting elements (54, 64, 74, 75) adapted for introduction in the recess (16, 17, 26) where the mechanical device (50, 55, 60, 70) is introduced, the one or more projecting elements (54, 64, 74, 75) being preferably adapted to be elastically deformable.

11. The method of any one of claims 8-9, wherein a first end (51, 61) of each of the one or more mechanical devices (50, 55, 60) has a planar shape (53, 63), and a second end (52, 62) of each of the one or more mechanical devices (50, 55, 60) has one or more projecting elements (54, 64) adapted for introduction in the recess (16, 17) where the mechanical device (50, 55, 60) is introduced, the first end (51, 61) being attached to a tile of the at least one tile (20) with adhesive means.

12. The method of claim 11, wherein each radiant panel of the at least one radiant panel (10a-10d) comprises one or more retention devices (65), each retention device (65) being introduced in a different one of the second one or more recesses (16, 17), and each retention device (65) being adapted to receive the one or more projecting elements (64) of one mechanical device (60) such that it provides resistance against withdrawal of the mechanical device (60) from the recess (16, 17), each retention device (65) being preferably adapted to be elastically deformable.

13. The method of any one of claims 8-12, wherein:
one or more radiant panels (10c) or each radiant panel (10c) of the at least one radiant panel has formed on two or more surfaces (13, 14) thereof one or more recesses (18) adapted to receive a mechanical device (40) for attaching the radiant panel (10c, 10d) to another radiant panel, the two or more surfaces (13, 14) being different from the first surface (11); and/or
one or more radiant panels (10d) or each radiant panel (10d) of the at least one radiant panel has formed on a second surface (12) thereof one or more recesses (19) adapted to receive a mechanical device (45) for attaching the radiant panel (10d) to a surface on which the radiant panel (10d) is to be arranged, the second surface (12) being opposite to the first surface (11).

14. The method of any one of claims 8-13, or the heat-radiating structure of claim 7, wherein the conduit (100) is adapted for flow of liquid therethrough.

15. The method of any one of claims 8-14, or the heat-radiating structure (1-6) of any one of claims 1-7 o 14, wherein the heat-radiating structure (1-6) is a heat-radiating floor structure.
